(19) Europäisches Patentamt
European Patent Office
Office européen des brevets

(11) **EP 2 541 200 B1**

(12) **FASCICULE DE BREVET EUROPEEN**

(45) Date de publication et mention
de la délivrance du brevet:
**19.03.2014 Bulletin 2014/12**

(51) Int Cl.:
***G01C 21/16*** *(2006.01)*

(21) Numéro de dépôt: **12305771.3**

(22) Date de dépôt: **29.06.2012**

(54) **Dispositif et procédé de navigation integrant plusieurs systemes inertiels de navigation hybridés**

Navigationsvorrichtung und -verfahren, das aus mehreren fahrzeugfest montierten Hybridnavigationssystemen besteht

Navigation device and method including a plurality of hybrid inertial navigation systems

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2011 FR 1155834**

(43) Date de publication de la demande:
**02.01.2013 Bulletin 2013/01**

(73) Titulaire: **IXBLUE**
**78160 Marly le Rol (FR)**

(72) Inventeur: **Napolitano, Fabien**
**78750 MAREIL-MARLY (FR)**

(74) Mandataire: **Coralis Harle**
**14-16 Rue Ballu**
**75009 Paris (FR)**

(56) Documents cités:
**FR-A1- 2 901 363       US-A- 5 719 764**
**US-A1- 2006 167 619    US-A1- 2011 040 430**

**EP 2 541 200 B1**

**Description**

L'invention se rapporte aux systèmes de navigation des avions, bateaux ou autres véhicules et en particulier au cas où plusieurs systèmes inertiels de navigation hybridés sont utilisés sur un même véhicule.

On entend par système de navigation hybridé un système comprenant au moins une unité de mesure inertielle et au moins un capteur auxiliaire, dans lequel un calculateur hybride les mesures provenant de l'unité de mesure inertielle avec les mesures provenant du capteur auxiliaire. Dans un système de navigation hybridé, l'hybridation des mesures de l'unité de mesure inertielle et du capteur auxiliaire permet d'atteindre des performances supérieures à celles de chacun des sous-systèmes et de réaliser des estimations de paramètres inaccessibles lorsque l'on considère chacun des sous-systèmes de mesure isolément.

Par exemple dans un système de navigation hybridé, l'utilisation d'un capteur auxiliaire de position permet d'obtenir des précisions d'estimation de cap qui seraient inatteignables si on considérait chacun des sous-systèmes de mesure pris isolément. En particulier, dans un système de navigation hybridé pour application marine, l'utilisation d'un capteur auxiliaire fournissant la vitesse par rapport au courant permet d'obtenir une estimation dudit courant ce qui serait impossible si on considérait chacun des sous-systèmes pris isolément.

L'utilisation de systèmes inertiels de navigation hybridés s'est généralisée dans de nombreuses applications depuis la fin des années 1990 grâce au développement de systèmes de calculs embarqués performants, à la généralisation de systèmes de navigation satellitaires ou d'autres systèmes d'aide à la navigation et à la réduction de coût des composants inertiels gyroscopiques et accélérométriques. De tels systèmes de navigation sont aujourd'hui présents sur un très grand nombre de plateformes, tels que les avions, les bateaux, les sous-marins, ou encore les véhicules terrestres ...

Dans un grand nombre de cas, plusieurs systèmes de navigation hybridés sont présents sur la même plateforme. La présence de multiples systèmes permet, en cas de détection de panne d'un des systèmes, de continuer à naviguer en utilisant le ou les autres systèmes. La présence de multiples systèmes permet par ailleurs de calculer par combinaison des informations de sortie des différents systèmes une information plus précise que celles issues de chacun des sous-systèmes. Cette configuration de systèmes hybridés multiples sur la même plateforme tend donc à se généraliser afin de répondre aux contraintes de sécurité et de performance de la navigation et donc d'intégrité du véhicule.

La méthode de détection d'anomalies dans de telles configurations est basée en général sur l'un des trois types de méthodes suivantes ou sur une combinaison d'un sous-ensemble de ces méthodes :

- une procédure dite de « vote majoritaire » s'applique à un dispositif comprenant au moins trois systèmes inertiels sur une même plateforme ;
- un contrôle du statut individuel de chaque système indépendamment des autres ; et/ou
- une estimation de covariance d'erreur fournie par chacun des systèmes.

Les procédures de type « vote majoritaire » permettent de détecter le système inertiel hybridé fonctionnant le moins bien parmi au moins trois systèmes inertiels hybridés comparables. Cependant, la méthode de « vote majoritaire » ne fonctionne pas dans le cas où seulement deux systèmes inertiels hybridés doivent être comparés. D'autre part, la méthode du « vote majoritaire » est mal adaptée aux cas où des systèmes de classes de performances différentes doivent être comparés. De plus, dans le cas où une majorité de systèmes inertiels hybridés sont affectés d'une même panne, le « vote majoritaire » peut entraîner des erreurs de navigation.

Les méthodes basées sur les statuts individuels permettent de détecter les pannes franches mais ne permettent pas de déterminer le système inertiel hybridé fonctionnant le mieux parmi plusieurs systèmes inertiels hybridés sans pannes franches.

Enfin, les méthodes basées sur les informations de type covariance d'erreur ne permettent pas de détecter des anomalies de fonctionnement mais seulement de comparer les performances de plusieurs systèmes sous réserve que chacun d'entre eux fonctionne nominalement. En particulier lorsque deux systèmes de mêmes caractéristiques sont utilisés sur le même véhicule, ils fournissent les mêmes informations de covariance d'erreur même si en pratique un des deux systèmes peut avoir une erreur significativement plus petite que l'autre.

Il existe donc un besoin d'une nouvelle méthode permettant de déterminer le système inertiel hybridé fonctionnant le mieux parmi une pluralité de systèmes inertiels hybridés. En particulier, dans le cas de deux systèmes inertiels hybridés, il est souhaitable de pouvoir déterminer le système fonctionnant le mieux, avec le moins d'erreur. Tout particulièrement, dans le cas de plusieurs systèmes inertiels de classes de performances différentes, il est souhaitable de pouvoir déterminer le système fonctionnant le mieux avec le moins d'erreur.

Dans les dernières années, on a développé de nouvelles méthodes de filtrage basées en particulier sur l'utilisation d'une évaluation de vraisemblance au sens statistique. Ces méthodes de filtrage permettent d'obtenir des indicateurs de bon fonctionnement d'un système composé de deux capteurs fournissant des informations comparables.

Ainsi le document US2011 /0040430 A1 décrit un système comprenant plusieurs Unités de Mesures Inertielles (UMI), un ou plusieurs capteurs auxiliaires et une unité de détection d'anomalie. L'unité de détection d'anomalie compare les données UMI et les données auxiliaires en fonction d'un critère basé sur la vraisemblance, ce qui permet de détecter des anomalies de fonctionnement des UMI ou de leurs capteurs élémentaires (gyroscope et accéléromètres).

D'autre part, le document US2010/0049439 A1 décrit un système de navigation hybridé comprenant une seule UMI et un seul capteur externe (GPS). Le système de navigation hybridé comprend deux filtres d'hybridation différents, disposés en parallèle et un calculateur compare les différentes hybridations du couple UMI - capteur auxiliaire suivant un critère de vraisemblance. Ce dispositif permet de sélectionner le meilleur filtre d'hybridation et de détecter des anomalies de fonctionnement de l'autre filtre hybridation.

Le document FR 2901363 A1 décrit un système de navigation hybridé comprenant deux UMi et plusieurs capteurs externes (GNSS multi-constellations et baro-altimètres).

Enfin, le document US2010/0256906 A1 décrit un système de navigation hybridé comprenant une seule UMI, un ou plusieurs capteurs auxiliaires et une banque de filtres multi-hypothèses. Ce dispositif permet de comparer les différents filtres suivant un critère de vraisemblance et de détecter des anomalies de fonctionnement de l'un des filtres.

Toutefois, ces dispositifs ne s'appliquent pas au cas relativement courant de multiples systèmes de navigation hybridés basés sur des UMI indépendantes. En effet, les dispositifs de US2010/0256906A1 et US2010/0049439 A1 ne s'appliquent qu'au cas d'une unique UMI. Par ailleurs, le dispositif de US2011/0040430 A1 nécessite un accès aux données UMI avant hybridation et impose donc de réaliser l'hybridation en aval. La méthode décrite dans le document US2011/0040430 A1 ne s'applique donc pas aux systèmes hybridés existant couramment sur le marché et dans lesquels la fonction d'hybridation est déjà câblée.

Il existe donc un besoin pour un système de détection d'anomalies capable de comparer le fonctionnement de plusieurs systèmes de navigation hybridés sans nécessiter de refondre les calculs d'hybridation et capable de détecter des anomalies fines de fonctionnement y compris lorsque seulement deux systèmes inertiels hybridés sont utilisés sur le même véhicule et qu'une procédure de type « vote majoritaire » est impossible.

Dans de nombreux cas, le système de navigation du véhicule que l'on veut positionner ne comprend pas de capteurs auxiliaires dont les informations de sortie sont directement comparables aux informations qui seraient issues d'une ou de plusieurs unités de mesure inertielle considérées isolément.

Par exemple, dans les applications marines et en cas d'absence temporaire ou systématique d'un signal GPS, la seule donnée auxiliaire disponible se restreint souvent à une donnée de vitesse relative à la couche d'eau dans laquelle navigue le bateau. Cette donnée étant la somme de la vitesse réelle et de la vitesse du courant marin, elle ne peut être comparée de façon pertinente aux données issues d'une unité de mesure inertielle considérée indépendamment.

Les systèmes actuels et en particulier le dispositif de US2011/0040430 ne permettent pas de répondre à cette problématique car ils nécessitent que les données du capteur auxiliaire correspondent à un sous-ensemble des données issues des unités de mesure inertielles.

Il existe donc un besoin pour un système de détection d'anomalies capable de comparer le fonctionnement de plusieurs systèmes de navigation en utilisant les données d'un capteur auxiliaire dont les informations de sorties ne sont pas directement comparables aux informations issues d'une unité ou de plusieurs unités de mesure inertielle considérées isolément.

Un des buts de l'invention est la détermination du meilleur système de navigation hybridé parmi une pluralité de systèmes de navigation hybridés embarqués sur un même véhicule.

Un des buts de l'invention est la détermination du meilleur système de navigation parmi une pluralité de systèmes de navigation embarqués sur un même véhicule dans le cas où les informations de sorties du ou des capteurs auxiliaires présents sur le véhicule ne permettent pas une comparaison directe avec les données issues des unités de mesure inertielle.

Par ailleurs, dans le cas où plusieurs systèmes de navigation sont présents sur le même véhicule, on souhaite combiner les informations de ces différents systèmes afin d'en déduire des informations plus précises que celle de chacun des sous-systèmes. Les deux méthodes les plus généralement utilisées dans ce cas sont les suivantes :

- un calcul de barycentre des informations des deux systèmes basés sur des coefficients barycentriques fixés à priori, ou
- un calcul de barycentre des informations des deux systèmes basés sur des coefficients barycentriques issus des informations de covariance d'erreur de chacun de ces systèmes

En pratique, ces méthodes de barycentre ne permettent ni l'une ni l'autre de tenir compte du comportement réel de chacun des systèmes lors d'une navigation et tendent d'une part à calculer des données sous-optimales, d'autre part à surestimer la qualité des données obtenues par combinaison des données de chacun des sous-systèmes. Par exemple dans le cas où deux systèmes de mêmes caractéristiques sont utilisés sur un véhicule, chacun de ces systèmes fournit au cours du temps les mêmes informations de covariance d'erreur. L'utilisation des informations de covariance d'erreur comme coefficient d'une procédure de moyennage revient, dans ce cas, à calculer la moyenne des sorties des deux systèmes, avec un coefficient barycentrique fixe égal à un demi pour chacun des systèmes. La covariance calculée des informations combinées est alors égale à la covariance commune des deux sous-systèmes divisée par deux. Bien que ce traitement soit optimal en théorie, il est de manière générale très sous optimal dans une situation réelle. En effet, dans une situation réelle supposons que l'un des deux systèmes fonctionne moins bien que l'autre. Ce disfonctionnement n'est pas détecté à partir des informations de sortie de covariance, si bien que le système fonctionnant le moins bien est affecté du même coefficient que le système fonctionnant le mieux. Les informations obtenues par combinaison sont alors sous optimales tandis que les estimations d'erreur de la combinaison sont trop optimistes. Cela se voit bien sur un exemple extrême où les informations de l'un des systèmes sont absolument fausses tandis que l'autre fonctionne nominalement. Dans ce cas, la combinaison optimale consiste à ne considérer que le système fonctionnant nominalement, l'autre système étant affecté d'un coefficient barycentrique égal à zéro, et la covariance de cette « combinaison » est évidemment la covariance de ce sous-système et non pas cette covariance divisée par deux comme calculée par les méthodes usuelles.

Il existe donc un besoin pour un système capable de combiner les informations de deux systèmes de navigation en tenant compte de leur comportement réel lors de la navigation afin d'en déduire des informations de navigation et d'erreur de navigation réalistes et proches de l'optimal.

La présente invention a pour but de remédier aux inconvénients des techniques antérieures et concerne plus particulièrement un dispositif de navigation hybridé pour un véhicule comprenant au moins un capteur auxiliaire apte à délivrer au moins un signal auxiliaire représentatif d'un paramètre auxiliaire de navigation du véhicule, et une pluralité de systèmes de navigation hybridés, chaque système de navigation hybridé comprenant au moins un système inertiel de navigation comprenant au moins une unité de mesure inertielle, ladite unité de mesure inertielle étant apte à délivrer au moins un signal représentatif d'une mesure inertielle, et chaque système de navigation hybridé comprenant au moins un calculateur configuré de manière à hybrider ledit au moins un signal représentatif d'une mesure inertielle avec ledit au moins un signal auxiliaire, pour former un signal hybridé en sortie de chaque système de navigation hybridé.

Selon l'invention, ledit dispositif de navigation hybridé comprend un module de détection de bon fonctionnement et de pondération desdits systèmes de navigation hybridés, ledit module étant configuré de manière à recevoir d'une part ledit au moins un signal auxiliaire et d'autre part lesdits signaux hybridés en sortie respectivement de chaque système de navigation hybridé et à en déduire au moins un indicateur de bon fonctionnement et un coefficient de pondération pour chaque système de navigation hybridé, ledit coefficient de pondération étant calculé respectivement en fonction d'une vraisemblance du résidu entre ledit signal hybridé et ledit signal auxiliaire, et ledit module étant configuré de manière à calculer un signal hybridé pondéré en fonction desdits signaux hybridés et des coefficients de pondération respectifs de chaque système de navigation hybridé.

Selon un mode de réalisation préféré, le module de détection de bon fonctionnement et de pondération comprend, pour chaque système de navigation hybridé, un bloc de calcul configuré pour calculer un résidu entre ledit signal hybridé et ledit signal auxiliaire et pour calculer un coefficient de pondération dudit signal hybridé en fonction de la vraisemblance dudit résidu ou en fonction de la log-vraisemblance dudit résidu.

Selon un mode de réalisation particulier, le dispositif de navigation hybridé comprend une pluralité de systèmes inertiels hybridés et une pluralité de capteurs auxiliaires, dans lequel chaque système inertiel est hybridé avec un capteur auxiliaire différent.

Selon un mode de réalisation particulier, le dispositif de navigation hybridé comprend une pluralité de systèmes inertiels hybridés et une pluralité de capteurs auxiliaires, dans lequel au moins un système inertiel hybridé est hybridé avec plusieurs capteurs auxiliaires et dans lequel le bloc de calcul associé est configuré de manière à calculer une vraisemblance globale d'un ensemble de capteurs et/ou une vraisemblance partielle relative à un sous-ensemble de capteurs parmi l'ensemble de capteurs hybridés audit système inertiel hybridé.

Selon différents aspects particuliers de l'invention :

- chaque calculateur est configuré de manière à calculer et à transmettre au module de détection d'une part les états de navigation dudit système de navigation hybridé et d'autre part un estimateur d'erreur desdits états de navigation ;
- l'estimateur d'erreur des états de navigation comprend la matrice de covariance des états de navigation ou une partie de la matrice de covariance des états de navigation ;
- le dispositif comprend deux systèmes inertiels hybridés et le signal hybridé pondéré est calculé en fonction desdits signaux hybridés et des coefficients de pondération respectifs de chaque système de navigation hybridé selon la formule suivante :

$$DATAOPT = \frac{\Lambda_{DATA1} DATA1 + \Lambda_{DATA2} DATA2}{\Lambda_{DATA1} + \Lambda_{DATA2}}$$

- où les coefficients de pondération $\Lambda_{DATA1}$ et $\Lambda_{DATA2}$ sont calculés respectivement en fonction de la vraisemblance du résidu entre ledit signal auxiliaire et ledit signal hybridé relatif à chaque système inertiel hybridé ;
- la covariance d'erreur SOPT du signal hybridé pondéré DATAOPT est obtenue par la formule suivante :

$$SOPT = \frac{\left(\Lambda_{DATA1}\right)^2 SDATA1 + \left(\Lambda_{DATA2}\right)^2 SDATA2}{\left(\Lambda_{DATA1} + \Lambda_{DATA2}\right)^2}$$

- lesdits blocs de calcul sont intégrés dans le ou les calculateurs d'un ou d'une pluralité de systèmes inertiels hybridés.

La présente invention concerne aussi un procédé de navigation pour véhicule, basé sur l'utilisation d'un dispositif selon l'un des modes de réalisation décrits et comprenant les étapes suivantes :

- Acquisition par au moins un capteur auxiliaire d'au moins un signal auxiliaire représentatif d'un paramètre de navigation du véhicule, et
- Acquisition d'une pluralité de signaux représentatifs respectivement d'une mesure inertielle, au moyen d'une pluralité de systèmes de navigation,
- Calcul d'un signal hybridé en sortie de chaque système de navigation hybridé à partir d'au moins un signal auxiliaire et d'un signal représentatif d'une mesure inertielle,
- Calcul d'un indicateur de bon fonctionnement et d'un coefficient de pondération pour chaque système de navigation hybridé en fonction d'une part du au moins un signal auxiliaire et d'autre part des signaux hybridés en sortie respectivement de chaque système de navigation hybridé, et
- calcul d'un signal hybridé pondéré en fonction desdits signaux hybridés et des coefficients de pondération respectifs de chaque système de navigation hybridé.

Selon un mode de réalisation préféré, le procédé de navigation comprend en outre les étapes suivantes :

- calcul d'un résidu entre ledit signal hybridé et ledit signal auxiliaire et
- calcul d'un coefficient de pondération respectif dudit signal hybridé basé sur la vraisemblance dudit résidu.

L'invention trouvera une application particulièrement avantageuse dans les dispositifs intégrant une pluralité de systèmes de navigation inertiels hybridés.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :

- la figure 1 représente schématiquement un dispositif selon un mode de réalisation du système de l'invention dans le cas de deux systèmes de navigation hybridés avec un capteur auxiliaire ;
- la figure 2 représente le coefficient d'amélioration de la covariance calculé en fonction du ratio des vraisemblances de deux sous-systèmes ($\Lambda_{DATA1}/\Lambda_{DATA2}$) dans le cas de deux sous-systèmes de caractéristiques identiques.

Dans une première partie nous décrivons rapidement le fonctionnement classique de tels systèmes. Dans une deuxième partie nous expliquons une méthode d'estimation de vraisemblance. Enfin, nous décrivons la mise en oeuvre de ces principes dans un dispositif de détection de bon fonctionnement et de pondération de systèmes inertiels de navigation hybridés.

## A- Systèmes inertiels de navigation hybridés

Le fonctionnement général des systèmes inertiels de navigation hybridés obéit à des principes classiques bien décrits dans la littérature (voir par exemple PHINS : the first high performance inertial navigation system based on fiber optic gyroscopes, F. Napolitano, T. Gaiffe, Y. Cottreau, T. Loret, Proceedings St Petersbourg International Conference on Navigation Systems 2002).

Au coeur d'un système inertiel de navigation se trouve une unité de mesure inertielle composée généralement d'au moins trois gyroscopes et trois accéléromètres (éventuellement plus dans des configurations redondantes). Les gyroscopes et les accéléromètres fournissent à haute cadence (typiquement 200Hz) les informations de rotations et d'accélération instantanées du système. Ces informations sont intégrées au sein d'un calculateur qui réalise éventuellement une compensation des données brutes capteurs suivant un modèle pré-calibré en usine (par exemple modèle de dépendance en température). Après compensation, les mesures compensées sont ensuite intégrées suivant les équations classiques de la dynamique, ce qui permet à partir d'une position et d'une orientation initiale de maintenir au cours du temps une position et une orientation actualisées.

Etant donné que les capteurs gyroscopique et accélérométrique sont en pratique imparfaits (typiquement les données qu'ils fournissent sont entachées de bruit, d'erreur de biais et de facteur d'échelle), l'intégration de ces erreurs conduit au cours du temps à des accumulations d'erreurs importantes sur la position et l'orientation actualisées.

On est donc conduit en général à hybrider les données de position et d'orientation avec les données issues d'autres types de capteurs fournissant des informations comparables. Ces capteurs auxiliaires sont par exemple des systèmes de radionavigation satellite (GPS, GLONASS,...), des capteurs de vitesse (log doppler, log électromagnétique, ...), des capteurs d'altimétrie combinés avec une cartographie préenregistrée (altimétrie radar, sondage bathymétrique,...).

L'hybridation est classiquement réalisée à l'aide d'un filtre de Kalman mais peut être réalisée avec toute méthode de fusion optimale (par exemple les nombreux filtres dérivés du filtre de Kalman : filtre de Kalman étendu, inodore, ..., filtre particulaires,...).

Le principe général de cette hybridation est le suivant. Au cours du temps, en parallèle de l'intégration des équations du mouvement, le calculateur entretient une estimation des erreurs du système. Cette estimation des erreurs du système est basée en particulier sur un modèle des erreurs des capteurs élémentaires de l'UMI et de leur assemblage. A chaque réception d'une information capteur auxiliaire, l'information de ce capteur est comparée avec le calcul du système de navigation. Le résidu, c'est à dire la différence, observé entre la prédiction du système de navigation et l'information capteur est alors combiné d'une part à l'estimation des erreurs du système de navigation et d'autre part à un modèle d'erreur de l'information du capteur auxiliaire. Le calculateur en déduit une correction du système de navigation inertiel ainsi que de son incertitude. Le calcul des états du système (position, vitesse, orientation) est ensuite poursuivi de façon récursive jusqu'à la prochaine information d'un capteur auxiliaire qui à son tour sert à corriger les estimations d'état et d'erreur du système de navigation. De préférence, les estimations d'erreurs du système de navigation sont représentées par la matrice de covariance estimée de ces erreurs.

En général, un système de navigation hybridé fournit donc d'une part une estimation des états du système (position, vitesse, orientation) mais aussi une estimation de la covariance d'erreur de ces états. Dans certains cas particuliers, le système fournit aussi des estimations d'autres paramètres qui ne sont pas directement des états de navigation (ainsi que de leurs erreurs). Par exemple ces paramètres particuliers peuvent être liés aux erreurs affectant les capteurs auxiliaires (par exemple, le courant marin dans le cas d'un log électromagnétique pour les applications marines).

**B- Estimation de vraisemblance**

L'estimation de vraisemblance d'une observation est basée sur les méthodes statistiques classiques.

Supposons qu'on observe une variable v dont la loi de probabilité N est connue. Par définition la vraisemblance d'une observation ve sera donnée par la valeur N(ve).

Par exemple, si la loi de probabilité est une loi normale multidimensionnelle de variance S, la vraisemblance de l'observation *r* est donnée par la formule :

$$\Lambda = \frac{1}{\sqrt{2\pi|S|}}\exp\left(-\frac{1}{2}r'S^{-1}r\right)$$

On applique ce type de calcul dans le cas où on considère un système de navigation hybridé d'une part et un capteur auxiliaire d'autre part. Dans ce cas, on suppose en général que les différentes variables sont gaussiennes, et on dispose d'une part de l'estimation P de variance des données du système de navigation hybridé avant fusion avec les données du capteur auxiliaire, d'autre part de l'estimation R de variance des données du capteur auxiliaire.

Si on note x l'état du système de navigation hybridé, z la donnée du capteur auxiliaire et H la matrice de mesure (matrice reliant l'état du système aux données du capteur auxiliaire), et $r$ le résidu, défini par l'équation :

$$r = z - Hx$$

on peut alors vérifier que le résidu $r$ a une distribution de probabilité gaussienne dont la variance est donnée par :

$$S = HPH^t + R$$

Comme on le voit dans cette formule, le calcul de la variance de l'observation est basé en particulier sur l'estimation d'erreur du système de navigation. Un calcul de vraisemblance basé sur cette variance tient donc compte naturellement de la classe de performance du système considéré ce qui permet d'utiliser ce type d'estimateur quelles que soient les classes de performances des systèmes que l'on considère.

On peut ensuite calculer, à partir des formules précédentes, la vraisemblance de l'observation réalisée en confrontant les données du système de navigation hybridé avec celle(s) du capteur auxiliaire. Un point important à noter est que ce calcul de vraisemblance statistique doit se faire avant que l'hybridation de l'IMU et du capteur auxiliaire soit réalisée.

Dans de nombreux cas, on ne se satisfait pas d'une estimation de vraisemblance basée sur un seul recalage et on est donc amené à calculer la log-vraisemblance correspondant à plusieurs réceptions successives de données du ou des capteurs auxiliaires.

Cette estimation de vraisemblance (ou de log-vraisemblance) fournit alors un indicateur de bon fonctionnement du système considéré.

**C- Mise en oeuvre d'un système de détection de bon fonctionnement et de pondération de systèmes inertiels de navigation hybridés**

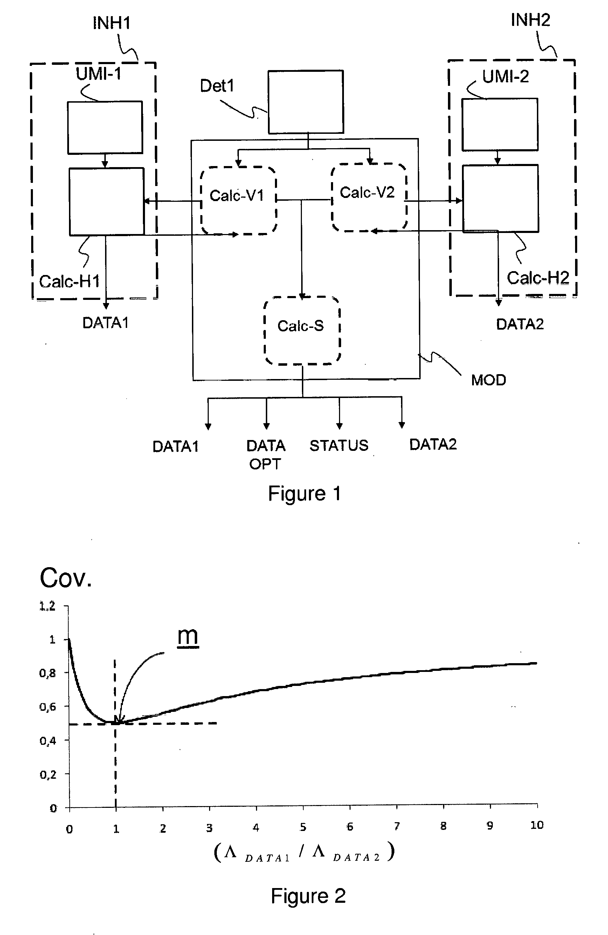

A partir de la méthode d'estimation de vraisemblance décrite ci-dessus, nous allons maintenant décrire un système de détection de bon fonctionnement et de pondération de systèmes inertiels hybridés selon un mode de réalisation particulier, en lien avec la figure 1.

La figure 1 représente schématiquement un dispositif de navigation inertiel comprenant un capteur auxiliaire Det1 et deux systèmes de navigation hybridés INH1 et INH2. Le dispositif comprend en outre un boîtier de calcul MOD relié d'une part au capteur auxiliaire Det1 et d'autre part aux deux systèmes hybridés INH1 et INH2.

Chaque système de navigation hybridé INH1, respectivement INH2, comprend une unité de mesure inertielle, UMI-1, respectivement UMI-2, et un calculateur Calc-H1, respectivement Calc-H2. Le calculateur Calc-H1 reçoit d'une part les mesures du capteur auxiliaire Det1 et d'autre part les mesures de l'UMI-1, et effectue un calcul d'hybridation entre les mesures de l'UMI-1 et du capteur auxiliaire Det1. De manière analogue, le calculateur Calc-H2 reçoit d'une part les mesures du capteur auxiliaire Det1 et d'autre part les mesures de l'UMI-2, et effectue un calcul d'hybridation entre les mesures de l'UMI-2 et du capteur auxiliaire Det1.

Le boîtier MOD reçoit à haute fréquence les informations DATA1 et DATA2 calculées par chacun des systèmes hybridés INH1 et INH2 et en particulier les estimations de position, vitesse, orientation du véhicule ainsi que les estimations d'incertitudes SDATA1 et SDATA2 (par exemple sous la forme d'une matrice de covariance).

Ce boîtier MOD reçoit aussi les informations du capteur auxiliaire Det1 avant que celles-ci soient transmises aux systèmes de navigation hybridés INH1 et INH2.

A chaque réception d'une information du capteur auxiliaire, le boîtier MOD réalise, dans un bloc de calcul respectivement Calc-v1 et Calc-v2, un calcul de vraisemblance, tel que décrit plus haut pour chacun des systèmes hybridés INH1 et INH2. A noter que pour réaliser ce calcul il n'est besoin d'aucune connaissance du fonctionnement interne des systèmes hybridés ou des caractéristiques de leurs capteurs gyroscopiques et accélérométriques IMU-1 ou IMU-2. Ce calcul de vraisemblance peut donc se faire indépendamment de la connaissance des systèmes de navigation inertiels INH1 et INH2 et est naturellement compatible avec tous types de systèmes de navigation hybridés sans modification.

Le boîtier MOD fournit en sortie, à la même cadence que les informations des systèmes de navigation hybridés (dans l'exemple de mise en oeuvre considéré), quatre type de données : les données DATA1 et DATA2 de chacun des systèmes hybridés, des données DATAOPT obtenues par pondération des données de chacun des systèmes hybridés et des données SOPT d'estimation de covariance d'erreur des données DATAOPT.

Typiquement le calcul de DATAOPT est réalisé suivant la formule suivante :

$$DATAOPT = \frac{\Lambda_{DATA1}DATA1 + \Lambda_{DATA2}DATA2}{\Lambda_{DATA1} + \Lambda_{DATA2}},$$

où $\Lambda_{DATA1}$ et $\Lambda_{DATA2}$ sont les vraisemblances calculées des données DATA1 et DATA2 (ces coefficients sont toujours strictement positifs).

Typiquement le calcul de SOPT est réalisé suivant la formule suivante :

$$SOPT = \frac{(\Lambda_{DATA1})^2 SDATA1 + (\Lambda_{DATA2})^2 SDATA2}{(\Lambda_{DATA1} + \Lambda_{DATA2})^2},$$

où $\Lambda_{DATA1}$ et $\Lambda_{DATA2}$ sont les vraisemblances calculées des données DATA1 et DATA2 (ces coefficients sont toujours strictement positifs).

Le boîtier MOD fournit aussi en sortie des informations STATUS sur les statuts de fonctionnement ou d'anomalie de chacun des systèmes de navigation hybridés. Ces statuts peuvent être par exemple les coefficients de pondération donnés plus haut ou des fonctions de ces coefficients de pondération (par exemple le résultat d'un seuillage sur ces coefficients permettant de donner un indicateur binaire de bon fonctionnement).

Cette description montre un mode de réalisation de l'invention, mais de nombreux modes de réalisation et variantes sont possibles.

Selon un autre mode de réalisation, le dispositif comprend plusieurs capteurs auxiliaires différents et le module de détection de bon fonctionnement et de pondération calcule soit une vraisemblance correspondant à l'ensemble des capteurs auxiliaires soit une vraisemblance correspondant à un sous-ensemble des capteurs auxiliaires.

Selon une variante d'un dispositif comprenant plusieurs capteurs auxiliaires différents, seule une partie de ces capteurs auxiliaires est utilisée pour être hybridée à certains systèmes de navigation inertiels et d'autres capteurs différents sont utilisés pour être hybridés à d'autres systèmes hybridés (par exemple dans le cas où deux capteurs auxiliaires GPS1 et GPS2 sont utilisés, le GPS1 étant hybridé uniquement à un premier système inertiel INS1 et le GPS2 étant hybridé uniquement à un second système inertiel système 2).

Selon un autre mode de réalisation, le dispositif comprend plus de deux systèmes de navigation hybridés, et au moins un bloc de calcul de vraisemblance Calc-Vi est associé à chaque système de navigation hybridé INHi.

Selon un mode de réalisation particulier, le boîtier MOD fournit uniquement en sortie des informations de vraisemblance relative de l'un des systèmes par rapport à l'autre, c'est-à-dire le ratio des vraisemblances correspondantes.

Selon un mode de réalisation particulier, le calculateur du boîtier MOD utilise des estimateurs d'erreurs des systèmes hybridés représentés sous une forme différente de la matrice de covariance, par exemple un estimateur d'erreur basé uniquement sur la partie diagonale de la matrice de covariance.

Selon un mode de réalisation particulier, le dispositif comprend une pluralité de calculateurs disponibles, les calculs étant répartis sur un nombre plus ou moins grand de calculateurs. Avantageusement, les calculs de vraisemblance sont partiellement ou totalement intégrés dans les calculateurs d'un ou des systèmes de navigation hybridés, sous réserve d'accessibilité de ces calculateurs.

Dans le cas de deux systèmes de caractéristiques identiques, la figure 2 représente le coefficient d'amélioration de la covariance (Cov.) calculé en fonction du ratio des vraisemblances des deux systèmes ($\Lambda_{DATA1}/\Lambda_{DATA2}$). Comme on le voit sur la figure 2, on retrouve le coefficient classique égal à un demi dans le cas où les deux systèmes ont la même vraisemblance, ce qui correspond à une moyenne classique m. Dans tous les autres cas, on constate que le coefficient d'amélioration est plus proche de un ce qui montre que le traitement classique tend à surestimer la performance des informations combinées.

L'invention permet de comparer le bon fonctionnement de plusieurs systèmes de navigation hybridés.

Le dispositif et le procédé de l'invention permettent d'utiliser plusieurs systèmes de navigation inertiels hybridés sur un même véhicule tout en fournissant un coefficient de pondération pour chaque système de navigation inertiel hybridé. De plus, l'invention permet de détecter le bon fonctionnement de chacun des systèmes de navigation inertiels hybridés utilisés. L'invention fournit une donnée combinée DATAOPT basée sur les estimations de bon fonctionnement de chacun des systèmes de navigation inertiels hybridés. De plus l'invention fournit une estimation d'erreur SOPT de cette donnée combinée DATAOPT.

Le dispositif et le procédé de l'invention permet d'utiliser des systèmes de navigations de classes de performances différentes.

Le dispositif et le procédé de l'invention permettent d'obtenir des estimations des états de navigation plus précises que celles obtenues par les méthodes classiques.

Le dispositif et le procédé de l'invention permettent d'obtenir une estimation de l'erreur des états de navigation plus réaliste et moins optimistes que les méthodes classiques

Le dispositif et le procédé de l'invention permet d'utiliser un ou plusieurs capteur(s) auxiliaire(s) pour évaluer le bon fonctionnement de chacun des systèmes de navigation hybridés. Notamment, on peut utiliser des capteurs auxiliaires dont les données ne sont pas directement comparables avec des états de navigation du véhicule et en particulier ne sont pas directement comparables avec des données issues d'unités de mesure inertielles considérées indépendamment.

Le dispositif de l'invention est compatible avec les systèmes de navigation hybridés déjà existants, auxquels il suffit de rajouter un module de calcul supplémentaire, disposé entre chaque système inertiel hybridé et le ou les capteurs auxiliaires associés.

**Revendications**

1. Dispositif de navigation hybridé pour un véhicule comprenant :

    - au moins un capteur auxiliaire (DET1) apte à délivrer au moins un signal auxiliaire représentatif d'un paramètre auxiliaire de navigation du véhicule, et
    - une pluralité de systèmes de navigation hybridés (INH1, INH2),
    - chaque système de navigation hybridé comprenant au moins un système inertiel de navigation comprenant au moins une unité de mesure inertielle (UMI-1, UMI-2), ladite unité de mesure inertielle (UMI-1, UMI-2) étant apte à délivrer au moins un signal représentatif d'une mesure inertielle, et chaque système de navigation hybridé comprenant au moins un calculateur (CALC-H, CALC-H2) configuré de manière à hybrider ledit au moins un signal représentatif d'une mesure inertielle avec ledit au moins un signal auxiliaire, pour former un signal hybridé en sortie de chaque système de navigation hybridé (DATA1, DATA2),

    **caractérisé en ce que** :

    ledit dispositif de navigation hybridé comprend un module (MOD) de détection de bon fonctionnement et de pondération desdits systèmes de navigation hybridés (INH1, INH2), ledit module (MOD) étant configuré de manière à recevoir d'une part ledit au moins un signal auxiliaire et d'autre part lesdits signaux hybridés (DATA1, DATA2) en sortie respectivement de chaque système de navigation hybridé (INH1, INH2) et à en déduire au moins un indicateur de bon fonctionnement (STATUS) et un coefficient de pondération pour chaque système de navigation hybridé (INH1, INH2), ledit coefficient de pondération étant calculé respectivement en fonction d'une vraisemblance du résidu entre ledit signal hybridé (DATA1, DATA2) et ledit signal auxiliaire, et ledit module (MOD) étant configuré de manière à calculer un signal hybridé pondéré (DATAOPT) en fonction desdits signaux hybridés (DATA1, DATA2) et des coefficients de pondération respectifs de chaque système de navigation hybridé.

2. Dispositif de navigation hybridé pour un véhicule selon la revendication 1 dans lequel le module (MOD) de détection de bon fonctionnement et de pondération comprend, pour chaque système de navigation hybridé (INH1, INH2), un bloc de calcul (Calc-V1, Calc-V2) configuré pour calculer un résidu entre ledit signal hybridé (DATA1, DATA2) et ledit signal auxiliaire et pour calculer un coefficient de pondération dudit signal hybridé en fonction de la vraisemblance dudit résidu ou en fonction de la log-vraisemblance dudit résidu.

3. Dispositif de navigation hybridé pour un véhicule selon la revendication 1 ou la revendication 2 comprenant une pluralité de systèmes inertiels hybridés (INH1, INH2) et une pluralité de capteurs auxiliaires, dans lequel chaque système inertiel est hybridé avec un capteur auxiliaire différent.

4. Dispositif de navigation hybridé pour un véhicule selon la revendication 2 comprenant une pluralité de systèmes inertiels hybridés (INH1, INH2) et une pluralité de capteurs auxiliaires, dans lequel au moins un système inertiel hybridé (INH1, INH2) est hybridé avec plusieurs capteurs auxiliaires et dans lequel le bloc de calcul associé (Calc-V1, Calc-V2) est configuré de manière à calculer une vraisemblance globale d'un ensemble de capteurs et/ou une vraisemblance partielle relative à un sous-ensemble de capteurs parmi l'ensemble de capteurs hybridés audit système inertiel hybridé.

**5.** Dispositif de navigation hybridé pour un véhicule selon l'une des revendications 1 à 4 dans lequel chaque calculateur (CALC-H1, CALC-H2) est configuré de manière à calculer et à transmettre au module (MOD) de détection d'une part les états de navigation dudit système de navigation hybridé et d'autre part un estimateur d'erreur desdits états de navigation.

**6.** Dispositif de navigation hybridé pour un véhicule selon la revendication 5 dans lequel l'estimateur d'erreur des états de navigation comprend la matrice de covariance des états de navigation ou une partie de la matrice de covariance des états de navigation.

**7.** Dispositif de navigation hybridé pour un véhicule selon l'une des revendications 1 à 6 dans lequel le dispositif comprend deux systèmes inertiels hybridés (INH1, INH2) et dans lequel le signal hybridé pondéré (DATAOPT) est calculé en fonction desdits signaux hybridés (DATA1, DATA2) et des coefficients de pondération respectifs de chaque système de navigation hybridé (INH1, INH2) selon la formule suivante :

$$DATAOPT = \frac{\Lambda_{DATA1}DATA1 + \Lambda_{DATA2}DATA2}{\Lambda_{DATA1} + \Lambda_{DATA2}}$$

où les coefficients de pondération $\Lambda_{DATA1}$ et $\Lambda_{DATA2}$ sont calculés respectivement en fonction de la vraisemblance du résidu entre ledit signal auxiliaire et ledit signal hybridé (DATA1, DATA2) relatif à chaque système inertiel hybridé (INH1, INH2).

**8.** Dispositif de navigation hybridé pour un véhicule selon la revendication 7 dans lequel la covariance d'erreur SOPT du signal hybridé pondéré DATAOPT est obtenue par la formule suivante :

$$SOPT = \frac{(\Lambda_{DATA1})^2 SDATA1 + (\Lambda_{DATA2})^2 SDATA2}{(\Lambda_{DATA1} + \Lambda_{DATA2})^2}$$

**9.** Dispositif de navigation hybridé pour un véhicule selon l'une des revendications 1 à 8 dans lequel lesdits blocs de calcul (Calc-V1, Calc-V2) sont intégrés dans le ou les calculateurs (CALC-H1, CALC-H2) d'un ou d'une pluralité de systèmes inertiels hybridés (INH1, INH2).

**10.** Procédé de navigation pour véhicule basé sur l'utilisation d'un dispositif selon l'une des revendications 1 à 9 et comprenant les étapes suivantes :

- Acquisition par au moins un capteur auxiliaire (DET1) d'au moins un signal auxiliaire représentatif d'un paramètre de navigation du véhicule, et
- Acquisition d'une pluralité de signaux représentatifs respectivement d'une mesure inertielle au moyen d'une pluralité de systèmes de navigation (INH1, INH2),
- Calcul d'un signal hybridé en sortie de chaque système de navigation hybridé (DATA1, DATA2) à partir d'au moins un signal auxiliaire et d'un signal représentatif d'une mesure inertielle,
- Calcul d'un indicateur de bon fonctionnement et d'un coefficient de pondération pour chaque système de navigation hybridé (INH1, INH2) en fonction d'une part du au moins un signal auxiliaire et d'autre part des signaux hybridés (DATA1, DATA2) en sortie respectivement de chaque système de navigation hybridé (INH1, INH2), et
- calcul d'un signal hybridé pondéré (DATAOPT) en fonction desdits signaux hybridés (DATA1, DATA2) et des coefficients de pondération respectifs de chaque système de navigation hybridé.

**11.** Procédé de navigation selon la revendication 10 comprenant les étapes suivantes pour chaque système de navigation hybridé :

- calcul d'un résidu entre ledit signal hybridé (DATA1, DATA2) et ledit signal auxiliaire et
- calcul d'un coefficient de pondération respectif dudit signal hybridé basé sur la vraisemblance dudit résidu.

**Patentansprüche**

1. Hybridisierte Navigationsvorrichtung für ein Fahrzeug, umfassend:

   - mindestens einen Hilfssensor (DET1), der geeignet ist, mindestens ein Hilfssignal zu liefern, das für einen Hilfsparameter für die Fahrzeugnavigation repräsentativ ist, und
   - mehrere hybridisierte Navigationssysteme (INH1, INH2),
   - wobei jedes hybridisierte Navigationssystem mindestens ein Inertial-Navigationssystem umfasst, das mindestens eine Inertialmesseinheit (UMI-2, UMI-2) aufweist, wobei die Inertialmesseinheit (UMI-1, UMI-2) geeignet ist, mindestens ein Signal abzugeben, das für eine Inertialmessung repräsentativ ist, und wobei jedes hybridisierte Navigationssystem mindestens einen Rechner (CALC-H1, CALC-H2) aufweist, der konfiguriert ist, um das mindestens eine Signal, das für eine Inertialmessung repräsentativ ist, mit dem mindestens einen Hilfssignal zu hybridisieren, um ein hybridisiertes Signal am Ausgang jedes hybridisierten Navigationssystems (DATA1, DATA2) zu bilden.

   **dadurch gekennzeichnet, dass**
   die hybridisierte Navigationsvorrichtung ein Modul (MOD) zur Erfassung der ordnungsgemäßen Funktionsweise und zur Bewertung der hybridisierten Navigationssysteme (INH1, INH2) aufweist, wobei das Modul (MOD) konfiguriert ist, um einerseits das mindestens eine Hilfssignal und andererseits die hybridisierten Signale (DATA1, DATA2) am Ausgang der jeweiligen hybridisierten Navigationssysteme (INH1, INH2) zu empfangen und daraus mindestens einen Indikator für die ordnungsgemäße Funktionsweise (STATUS) und einen Gewichtungskoeffizienten für jedes hybridisierte Navigationssystem (INH1, INH2) abzuleiten, wobei der Gewichtungskoeffizient jeweils entsprechend einer Wahrscheinlichkeit des Rückstands zwischen dem hybridisierten Signal (DATA1, DATA2) und dem Hilfssignal berechnet wird und das Modul (MOD) so konfiguriert ist, dass ein gewichtetes hybridisiertes Signal (DATAOPT) in Abhängigkeit von den hybridisierten Signalen (DATA1, DATA2) und den jeweiligen Gewichtungskoeffizienten jedes hybridisierten Navigationssystems berechnet wird.

2. Hybridisierte Navigationsvorrichtung für ein Fahrzeug nach Anspruch 1, wobei das Modul (MOD) zur Erfassung der ordnungsgemäßen Funktionsfähigkeit und zur Gewichtung für jedes hybridisierte Navigationssystem (INH1, INH2) einen Berechnungsblock (Calc-V1, Calc-V2) aufweist, der konfiguriert ist, um einen Rückstand zwischen dem hybridisierten Signal (DATA1, DATA2) und dem Hilfssignal zu berechnen und um einen Gewichtungskoeffizienten des hybridisierten Signals in Abhängigkeit von der Wahrscheinlichkeit des Rückstands oder in Abhängigkeit von der Log-Wahrscheinlichkeit des Rückstands zu berechnen.

3. Hybridisierte Navigationsvorrichtung für ein Fahrzeug nach Anspruch 1 oder Anspruch 2, umfassend mehrere hybridisierte Inertialsysteme (INH1, INH2) und mehrere Hilfssensoren, wobei jedes Inertialsystem mit einem unterschiedlichen Hilfssensor hybridisiert ist.

4. Hybridisiertes Navigationssystem für ein Fahrzeug nach Anspruch 2, umfassend mehrere hybridisierte Inertialsysteme (INH1, INH2) und mehrere Hilfssensoren, wobei mindestens ein hybridisiertes Inertialsystem (INH1, INH2) mit mehreren Hilfssensoren hybridisiert ist und wobei der verbundene Berechnungsblock (Calc-V1, Calc-V2) konfiguriert ist, um eine globale Wahrscheinlichkeit einer Gesamtheit von Sensoren und/oder eine partielle Wahrscheinlichkeit in Bezug auf eine Untergesamtheit von Sensoren aus der Gesamtheit von hybridisierten Sensoren in dem hybridisierten Inertialsystem zu berechnen.

5. Hybridisierte Navigationsvorrichtung für ein Fahrzeug nach einem der Ansprüche 1 bis 4, wobei jeder Rechner (CALC-H1, CALC-H2) konfiguriert ist, um einerseits die Navigationszustände des hybridisierten Navigationssystems und andererseits eine Fehlerschätzeinrichtung der Navigationszustände zu berechnen und an das Erfassungsmodul (MOD) zu übertragen.

6. Hybridisierte Navigationsvorrichtung für ein Fahrzeug nach Anspruch 5, wobei die Fehlerschätzeinrichtung der Navigationszustände die Kovarianzmatrix der Navigationszustände oder einen Teil der Kovarianzmatrix der Navigationszustände aufweist.

7. Hybridisierte Navigationsvorrichtung für ein Fahrzeug nach einem der Ansprüche 1 bis 6, wobei die Vorrichtung zwei hybridisierte Inertialsysteme (INH1, INH2) aufweist und wobei das gewichtete hybridisierte Signal (DATAOPT) in Abhängigkeit von den hybridisierten Signalen (DATA1, DATA2) und den jeweiligen Gewichtungskoeffizienten jedes hybridisierten Navigationssystems (INH1, INH2) gemäß der folgenden Formel berechnet wird:

$$DATAOPT = \frac{\Lambda_{DATA1} DATA1 + \Lambda_{DATA2} DATA2}{\Lambda_{DATA1} + \Lambda_{DATA2}}$$

wobei die Gewichtungskoeffizienten $\Lambda_{DATA1}$ und $\Lambda_{DATA2}$ berechnet werden in Abhängigkeit von der Wahrscheinlichkeit des Rückstands zwischen dem Hilfssignal beziehungsweise dem hybridisierten Signal (DATA1, DATA2) in Bezug auf jedes hybridisierte Inertialsystem (INH1, INH2).

8. Hybridisierte Navigationsvorrichtung für ein Fahrzeug nach Anspruch 7, wobei die Fehlerkovarianz SOPT des gewichteten hybridisierten Signal DATAOPT durch folgende Formel erhalten wird:

$$SOPT = \frac{(\Lambda_{DATA1})^2 SDATA1 + (\Lambda_{DATA2})^2 SDATA2}{(\Lambda_{DATA1} + \Lambda_{DATA2})^2}$$

9. Hybridisierte Navigationsvorrichtung für ein Fahrzeug nach einem der Ansprüche 1 bis 8, wobei die Berechnungsblöcke (Calc-V1, Calc-V2) in dem oder den Rechnern (CALC-H1, CALC-H2) eines oder mehrerer hybridisierter Inertialsysteme (INH1, INH2) integriert sind.

10. Navigationsverfahren für ein Fahrzeug aufgrund der Verwendung einer Vorrichtung nach einem der Ansprüche 1 bis 9, das folgende Schritte aufweist:

- Erfassung mindestens eines Hilfssignals, das für einen Hilfsparameter für die Fahrzeugnavigation repräsentativ ist, durch mindestens einen Hilfssensor (DET1), und
- Erfassung mehrerer Signale, die jeweils für eine Inertialmessung mit Hilfe mehrerer Navigationssysteme (INH1, INH2) repräsentativ sind,
- Berechnung eines hybridisierten Signals am Ausgang jedes hybridisierten Navigationssystems (DATA2, DATA2) anhand mindestens eines Hilfssignals und eines Signals, das für eine Inertialmessung repräsentativ ist,
- Berechnung eines Indikators für die ordnungsgemäße Funktionsweise und eines Gewichtungskoeffizienten für jedes hybridisierte Navigationssystem (INH1, INH2) in Abhängigkeit einerseits von mindestens einem Hilfssignal und andererseits von den hybridisierten Signalen (DATA1, DATA2) am Ausgang des jeweiligen hybridisierten Navigationssystems (INH1, INH2), und
- Berechnung eines gewichteten hybridisierten Signals (DATAOPT) in Abhängigkeit von den hybridisierten Signalen (DATA1, DATA2) und den jeweiligen Gewichtungskoeffizienten jedes hybridisierten Navigationssystems.

11. Navigationsverfahren nach Anspruch 10, das folgende Schritte für jedes hybridisierte Navigationssystem aufweist:

- Berechnung eines Rückstands zwischen dem hybridisierten Signal (DATA1, DATA2) und dem Hilfssignal, und
- Berechnung eines jeweiligen Gewichtungskoeffizienten des hybridisierten Signals aufgrund der Wahrscheinlichkeit des Rückstands.

## Claims

1. A hybrid navigation device for a vehicle, comprising:

- at least one auxiliary sensor (DET1) adapted to deliver at least one auxiliary signal representative of an auxiliary navigation parameter of the vehicle, and
- a plurality of hybrid navigation systems (INH1, INH2),
- each hybrid navigation system comprising at least one inertial navigation system comprising at least one inertial measuring unit (IMU-1, IMU-2); said inertial measuring unit (IMU-1, IMU-2) being adapted to deliver at least one signal representative of an inertial measurement, and each hybrid navigation system comprising at least one calculator (CALC-H1, CALC-H2) configured in such a manner to hybridize said at least one signal representative of an inertial measurement with said at least one auxiliary signal, to form a hybrid signal at the output of each hybrid navigation system (DATA1, DATA2),

**characterized in that**:

said hybrid navigation device comprises a module (MOD) for the detection of good operating condition and the weighting of said hybrid navigation systems (INH1, INH2), said module (MOD) being configured in such a manner to receive, on the one hand, said at least one auxiliary signal, and on the other hand, said hybrid signals (DATA1, DATA2) at the output of each hybrid navigation system (INH1, INH2), respectively, and to deduce therefrom at least one indicator of good operating condition (STATUS) and a weighting coefficient for each hybrid navigation system (INH1, INH2), said weighting coefficient being respectively calculated as a function of a likelihood of the residue between said hybrid signal (DATA1, DATA2) and said auxiliary signal, and said module (MOD) being configured in such a manner to calculate a weighted hybrid signal (DATAOPT) as a function of said hybrid signals (DATA1, DATA2) and of the weighting coefficients of each hybrid navigation system, respectively.

2. A hybrid navigation device for a vehicle according to claim 1, wherein the good-operating-condition detection and weighting module (MOD) comprises, for each hybrid navigation system (INH1, INH2), a calculation block (Calc-V1, Calc-V2) configured to calculate a residue between said hybrid signal (DATA1, DATA2) and said auxiliary signal and to calculate a weighting coefficient of said hybrid signal as a function of the likelihood of said residue or as a function the log-likelihood of said residue.

3. A hybrid navigation device for a vehicle according to claim 1 or claim 2, comprising a plurality of hybrid inertial systems (INH1, INH2) and a plurality of auxiliary sensors, wherein each inertial system is hybridized with a different auxiliary sensor.

4. A hybrid navigation device for a vehicle according to claim 2, comprising a plurality of hybrid inertial systems (INH1, INH2) and a plurality of auxiliary sensors, wherein at least one hybrid inertial system (INH1, INH2) is hybridized with several auxiliary sensors, and wherein the associated calculation block (Calc-V1, Calc-V2) is configured in such a manner to calculate a whole likelihood of a set of sensors and/or a partial likelihood relating to a sub-set of sensors from the set of sensors hybridized to the hybrid inertial system.

5. A hybrid navigation device for a vehicle according to any one of claims 1 to 4, wherein each calculator (CALC-H1, CALC-H2) is configured in such a manner to calculate and to transmit to the detection module (MOD), on the one hand, the navigation states of said hybrid navigation system, and on the other hand, an error estimator for said navigation states.

6. A hybrid navigation device for a vehicle according to claim 5, wherein the error estimator for the navigation states comprises the covariance matrix of the navigation states or a part of the covariance matrix of the navigation states.

7. A hybrid navigation device for a vehicle according to any one of claims 1 to 6, wherein the device comprises two hybrid inertial systems (INH1, INH2) and wherein the weighted hybrid signal (DATAOPT) is calculated as a function of said hybrid signals (DATA1, DATA2) and of the respective weighting coefficients of each hybrid navigation system (INH1, INH2), according to the following formula:

$$DATAOPT = \frac{\Lambda_{DATA1} DATA1 + \Lambda_{DATA2} DATA2}{\Lambda_{DATA1} + \Lambda_{DATA2}}$$

where the weighting coefficients $\Lambda_{DATA1}$ and $\Lambda_{DATA2}$ are respectively calculated as a function of the likelihood of the residue between said auxiliary signal and said hybrid signal (DATA1, DATA2) relating to each hybrid inertial system (INH1, INH2).

8. A hybrid navigation device for a vehicle according to claim 7, wherein the error covariance SOPT of the weighted hybrid signal DATAOPT is obtained by the following formula:

$$SOPT = \frac{\left(\Lambda_{DATA1}\right)^2 SDATA1 + \left(\Lambda_{DATA2}\right)^2 SDATA2}{\left(\Lambda_{DATA1} + \Lambda_{DATA2}\right)^2}$$

9. A hybrid navigation device for a vehicle according to any one of claims 1 to 8, wherein said calculation blocks (Calc-V1, Calc-V2) are integrated in the calculator(s) (CAL-H1, CALC-H2) of one or a plurality of hybrid inertial systems (INH1, INH2).

10. A method of navigation for a vehicle, based on the use of a device according to one of the claims 1 to 9, and comprising the following steps:

- acquiring by at least one auxiliary sensor (DET1) at least one auxiliary signal representative of a navigation parameter of the vehicle, and
- acquiring a plurality of signals representative, respectively, of an inertial measurement, by means of a plurality of navigation systems (INH1, INH2),
- calculating a hybrid signal at the output of each hybrid navigation system (DATA1, DATA2) based on at least one auxiliary signal and a signal representative of an inertial measurement,
- calculating an indicator of good operating condition and a weighting coefficient for each hybrid navigation system (INH1, INH2) as a function, on the one hand, of the at least one auxiliary signal, and on the other hand, of the hybrid signals (DATA1, DATA2) at the output of each hybrid navigation system (INH1, INH2), respectively, and
- calculating a weighted hybrid signal (DATAOPT) as a function of said hybrid signals (DATA1, DATA2) and of the weighting coefficients of each hybrid navigation system, respectively.

11. A method of navigation according to claim 10, comprising the following steps for each hybrid navigation system:

- calculating a residue between said hybrid signal (DATA1, DATA2) and said auxiliary signal, and
- calculating a respective weighting coefficient of said hybrid signal based on the likelihood of said residue.

Figure 1

$$\left( \Lambda_{DATA1} / \Lambda_{DATA2} \right)$$

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110040430 A1
- US 20100049439 A1
- FR 2901363 A1
- US 20100256906 A1
- US 20110040430 A

**Littérature non-brevet citée dans la description**

- **F. NAPOLITANO ; T. GAIFFE ; Y. COTTREAU ; T. LORET.** PHINS : the first high performance inertial navigation system based on fiber optic gyroscopes. *Proceedings St Petersbourg International Conference on Navigation Systems,* 2002